# EUROPEAN PATENT SPECIFICATION

(11) **EP 4 298 955 B1**
(45) Date of publication and mention of the grant of the patent: **30.07.2025**
(21) Application number: 23209575.2
(22) Date of filing: 13.01.2021
(51) Int. Cl.: A61C 17/22, A61C 17/32, A46B 9/04

(54) **METHOD OF MANUFACTURING BRISTLED PAD AND MOUTHPIECE FOR BRUSHING PLURALITY OF DENTAL POSITIONS, MOUTHPIECE AND BRISTLE PAD**
VERFAHREN ZUR HERSTELLUNG EINES BORSTENKISSENS UND MUNDSTÜCK ZUM BÜRSTEN EINER VIELZAHL VON ZAHNPOSITIONEN, MUNDSTÜCK UND BORSTENKISSEN
PROCÉDÉ DE FABRICATION DE TOUFFE DE SOIES ET D'EMBOUT BUCCAL DESTINÉS AU BROSSAGE D'UNE PLURALITÉ DE POSITIONS DENTAIRES, EMBOUT BUCCAL ET TOUFFE DE SOIES

(30) Priority: 13.01.2020 NL 2024655
(43) Date of publication of application: 03.01.2024
(62) Divisional of application: 21701241.8
(73) Proprietor: Dental Robotics Group B.V., 2629 JD Delft (NL)
(72) Inventor: VAN DIJK, Joppe Gideon, 2629 JD (NL); SNIJDER, Tim Anton, 2629 JD (NL); VAN DE WATER, Thomas, 2629 JD (NL)
(74) Representative: Schicker, Silvia

(56) References cited:
- US-A1- 2018 184 795

## Description

The invention relates to the field of dental cleaning devices having a mouthpiece for simultaneously brushing at a plurality of dental positions, in particular to dental cleaning devices wherein the mouthpiece is of the type comprising a body having a recess and at least one bristle carrier lined with bristles, wherein the recess has a J-shaped or U-shaped length direction and a U-shaped cross-section transverse to the length direction and being configured for encompassing a dental arch of multiple dental positions, and wherein the at least one bristle carrier delimits the recess. Such a dental cleaning device is used for simultaneously cleaning multiple - preferably all the - teeth and/or dental positions (in case one or more teeth may be missing) of one dental arch or both dental archs in case the body has two such recesses having the J-shaped or U-shaped length directions of both recesses extending parallel and having the U-shaped cross-sections of both recesses opening in mutually opposite direction.

### BACKGROUND OF THE INVENTION

Cleaning of teeth of humans and animals is a prerequisite for oral health, and health of internal organs. Various dental cleaning devices are available, such as manual and powered toothbrushes. With these typical toothbrushes, it is advised to brush the teeth by a prescribed method for at least two minutes per day to effectively remove plaque. Yet, an average person does not spend all of the prescribed time cleaning his or her teeth, and does not always brush according to an effective method. Additionally, for disabled or elderly persons or children it can be difficult to brush the teeth with a toothbrush, since typical toothbrushes require precise positioning of the brush bristles on various surfaces of the teeth.

In case at some or all dental positions teeth are missing as is frequently the case with elderly persons, cleaning of the gum at these dental positions is still a prerequisite for oral health, and health of internal organs.

There is a need to automatically brush the teeth and/or gum at the dental positions for cleaning the teeth and/or gum at these dental positions, whereby the time and effort required for effective brushing is reduced. In addition, there is a need to avoid carefully manoeuvring the brush.

Dental cleaning devices are known comprising mouthpieces which cover the maxillary dental arch and/or the mandibular dental arch. These mouthpieces may be of the type comprising a body provided with at least one recess delimited by a recess wall lined with a plurality of bristles extending from the recess wall into the recess, the recess wall defining a U-shaped length axis and, viewed transverse to the length axis, a U-shaped cross-sectional shape and being configured for encompassing a plurality of dental positions along a dental arch. The dental positions, like teeth and/or gum, to be brushed are inserted in the at least one recess and the recess wall lined with bristles is operated to brush the teeth and/or gum with the bristles on the recess wall. Depending on the length of the recess several or all dental positions of the maxillary dental arch and/or the mandibular dental arch may be brushed simultaneously. An example of such a mouth piece can be found in WO-2018/199760 or US 2018/0184795 A1.

A part of such a mouthpiece is the recess wall lined with bristles, which recess is in length direction U-shaped and has transverse to this length direction a U-shaped cross-section, and which has the bristles at the inner side of the recess. The small inner space of the U-shaped cross-section and the arch-shaped length make the manufacturing of such a recess wall lined with bristles quite difficult. Of course such a recess wall lined with bristles can be made manually by attaching the bristles or tufts of bristles one by one to the recess wall. This is however labour intensive and not time and cost efficient. Such a recess wall with U-shaped cross-section and bristles on the inner side of the recess may further be made by injection moulding the recess wall and bristles simultaneously, but, due to the small inner width of the U-shape, unloading the moulded recess wall and bristles from the mould is not possible or quite difficult to deal with without damaging the moulded product.

Further problems with such mouthpieces of the type according to WO-2018/199760 and US 2018/0184795 A1 or according to other designs like for example shown in WO-2009/150559, US-8,359,692, US-4,224,710, are amongst others:
- Because the mouthpiece is to be fully inserted into the mouth the dimensions of the mouthpiece are to be kept small in order to avoid discomfort in use and gag reflex. Keeping dimensions small is the more a problem when a drive is to be arranged I the mouthpiece for bringing the bristles into a cleaning motion. The mouthpiece should fit around the teeth. All this means that it is of importance to keep the bristle connection (i.e. the attachment of the bristles to the rest of the mouthpiece) as small as possible.
- On the other hand, in order to avoid bristles to separate from the mouthpiece (and possibly being swallowed by the user), it is of importance that the bristles meet a certain retention force. 15-20 Newton per tuft is presently a usual standard for the retention force. This retention force contradicts keeping the bristle connection as small as possible.

- The requirements used for the bristle material frequently differ from the ones of the material used for the rest of the mouthpiece, resulting in challenges in attaching the bristles to the rest of the mouthpiece.
- The bristle lining inside the recess has to be able to follow the U-shaped dental arch as well as the much smaller U-shaped cross-sectional shape of the recess.

Thus there is a need for a method of manufacturing a mouthpiece for simultaneously brushing at a plurality of dental positions, wherein the mouthpiece is of the type comprising a body having a recess lined with bristles, which recess has a J-shaped or U-shaped length direction and a U-shaped cross-section transverse to the length direction and is configured for encompassing a dental arch of multiple dental positions, and wherein the at least one bristle carrier delimits the recess.

### SUMMARY OF THE INVENTION

The invention is as defined in the appended claims.

It is an object of the invention to provide an alternative method of manufacturing a mouthpiece for simultaneously brushing at a plurality of dental positions, wherein the mouthpiece is of the type comprising a body having a recess lined with bristles, which recess has a J-shaped or U-shaped length direction and an at least partly U-shaped cross-section transverse to the length direction and is configured for encompassing a dental arch of multiple dental positions, and wherein the at least one bristle carrier delimits the recess. A further object of the invention is to provide such a method overcoming one or more of the above problems associated with the manufacturing of such mouthpieces.

These objects are addressed by a method of manufacturing a bristled pad as defined in claim 1, a method of manufacturing a mouthpiece as defined in claim 2, a bristled pad as defined in claim 8, a mouthpiece as defined in claim 9 and a dental cleaning device as defined in claim 12.

According to an examplary first aspect of the description, a method of manufacturing a mouthpiece for simultaneously brushing at a plurality of dental positions is disclosed, the mouthpiece being of the type comprising a body defining a recess which is lined with bristles and has a J-shaped or U-shaped length direction and an at least partly U-shaped cross-section transverse to the length direction (the cross-section may be partly U-shaped, because, for example at the incisors, the bottom of the U-shape may be open or V-shaped);
wherein the method comprises a pad manufacturing step in which at least one pad with bristles is made; the pad comprises a pliable foil - such as a plastic foil - and bristles - such as plastic bristles - projecting from a front surface of the foil; the foil having a back surface opposite the front surface; and the pad manufacturing step comprising:
   - providing bristles with a fixed end and a free end,
   - providing a prefabricated foil having a thickness of at most 700 µm, and
   - fusing the fixed ends of the bristles with the prefabricated foil,
resulting in the bristled pad to be made;
   wherein the method further comprises a body providing step in which a body of the mouthpiece to be manufactured is provided; the body providing step comprising providing a body with a recess and at least one bristle carrier; the recess having a J-shaped or U-shaped length direction and an at least partly U-shaped cross-section transverse to the length direction and being configured for encompassing a dental arch of multiple dental positions; the at least one bristle carrier delimiting the recess; and
   wherein the method further comprises a pad attaching step in which during or after the body providing step one or more bristled pads obtained in the pad manufacturing step are attached to the at least one bristle carrier to line the bristle carrier with bristles; the back surface side of the foil facing the bristle carrier and the front surface side of the foil facing away from the bristle carrier into the recess.

The method according to the examplary first aspect basically comprises three main steps. Each main step may comprise further sub-steps, some of which will be discussed further below.

The main steps are manufacturing a bristled pad - called the pad manufacturing step -, a body providing step in which the body is provided, and a pad attaching step wherein the bristled pad is attached to the body. According to a further embodiment of the examplary first aspect, the prefabricated foil may be manufactured in the pad providing step, such as about simultaneously with fusing the bristles to the prefabricated foil. This may for example be done by extruding or injection moulding the foil over the fixed ends of the bristles, in which use is made of the foil still being in a hot condition enabling it to be fused with the fixed ends of the bristles. According to an alternative or supplementary other further embodiment of the examplary first aspect, the body may be manufactured in the providing step.

The bristled pad may already have been made before the body providing step. The bristled pad may be attached to the body after the body providing step. In case the body is manufactured in the body providing step, the bristled pad may also be attached to the body during the body providing step. The bristled part may for example be adhered with an adhesive to the bristle carrier. Attaching the bristled pad to the body during the body providing step may according to a specific embodiment of the examplary first aspect considerably facilitate integrating the pad as integral part of the body. An example of attaching the bristled pad during the body providing step, is integrating the pad into the body during injection moulding the body or part of the body. The pad may be a pre-fabricated insert and may be placed in the mould before injecting the injection moulding material for moulding (at least part of) the body so that after hardening of the injection moulding material the pad is integrated with or in the injection moulding material. The bristled pad may also be made during, such as simultaneously with, or after the body providing step. When the bristled pad is made after the body providing step, the pad attaching step will take place after the body providing step as well. In this case the pad attaching step may be a step in which two pre-fabricated parts (the bristled pad and the body or part of the body) are assembled together. As will be clear to the skilled man, it is also conceivable that the pad attaching step is a step in which two pre-fabricated parts are assembled together in case the bristled part is manufactured before or during manufacturing of the body.

According to the examplary first aspect, the pad is a bristled pad consisting of a foil and bristles projecting from a front surface of the foil. The back surface of the foil opposite the front surface is essentially flat. In fact, according to a further embodiment of the examplary first aspect, the pad is made by assembling together only two components: a pre-fabricated foil and pre-fabricated bristles, such as tufts of bristle hairs/fibers. The foil is pliably, i.e. supple bending, so that it can easily follow the curvatures of the recess - the curvature due to the J-shaped or U-shaped length direction of the recess and/or the curvature due to the U-shaped cross section of the recess - and therefore has a thickness of at most 700 µm. Such a thickness also does not use much space in the mouthpiece. Further the fixed ends of the bristles - i.e. the ends opposite the free ends of the bristles projecting into the recess of the mouthpiece to be manufactured - are fused to the foil, in other words attached to the foil by fusing the fixed ends of the bristles and the foil. This results in a bristled pad made from assembling a foil and bristles. Due to the fused connection the connection between bristles and foil is strong. Due to the pliability of the foil it is easy to attach the pad into the recess whilst the back surface of the foil follows the shape of the surface of the bristle carrier to which it is attached. Due to the small thickness of the foil, a significant increase in mouthpiece dimension is prevented.

According to a further embodiment of the examplary first aspect, the thickness of the prefabricated foil is at most 400 µm, or at most 250 µm such as at most 150 µm. According to another further embodiment of the first aspect, the prefabricated foil has a thickness of at least 50 µm in order to ensure the foil to be sufficient strong. Taking into account the presently anticipated fusing techniques, it seems that the prefabricated foil may have a thickness in the range of 50-250 µm, such as in the range of 50-150 µm, whilst still providing sufficient retention force to prevent on the one hand bristles from separating from the foil and on the other hand foil parts with bristles from separating from the rest of the foil due to locally tearing or breaking of the foil.

When fusing the bristles with (or to) the prefabricated foil, the thickness of the foil may increase due to melt originating from the fixed ends of the bristles. Taking this into account, the examplary first aspect may in addition or alternatively be defined in terms of thickness of the foil of the bristled pad, i.e. the foil after fusing it with the bristles:
- Thus, according to a further embodiment of the examplary first aspect of the idescription, the bristled foil may in addition be defined as having as thickness of at most 1.5 mm, such as at most 1 mm or at most 750 µm. This thickness of the bristled foil is the thickness of the foil in the resulting pad exclusive the length the bristles. In other words the bristles itself are not part of the thickness.
- Thus, according to claim 2, an aspect of the invention is defined as *"Method of manufacturing a mouthpiece for simultaneously brushing at a plurality of dental positions, the mouthpiece being of the type comprising a body defining a recess which is lined with bristles and has a J-shaped or U-shaped length direction and an at least partly U-shaped cross-section transverse to the length direction,*

*wherein the method comprises the pad manufacturing steps of claim 1 in which at least one pad with bristles is made; the pad consisting of a pliable plastic foil and plastic bristles projecting from a front surface of the foil; the foil having a back surface opposite the front surface; and the pad manufacturing steps resulting in a bristled pad with a foil having a thickness of at most 1.5 mm, such as at most 1 mm or at most 750 µm;*
*wherein the method further comprises a body providing step in which a body of the mouthpiece to be manufactured is provided; the body providing step comprising providing a body with a recess and at least one bristle carrier; the recess having a J-shaped or U-shaped length direction and an at least partly U-shaped cross-section transverse to the length direction and being configured for encompassing a dental arch of multiple dental positions; the at least one bristle carrier delimiting the recess; and*
*wherein the method further comprises a pad attaching step in which during or after the body providing step one or more bristled pads are attached to the at least one bristle carrier to line the bristle carrier with bristles; the back surface side of the foil facing the bristle carrier and the front surface side of the foil facing away from the bristle carrier into the recess."*

According to another further embodiment of the exemplary first aspect of the description, the pliable foil of the bristled pad has a bending resistance of less than 2 Newton - such as less than 1.3 Newton or less than 0.5 Newton -, the bending resistance being defined as the force F required to bend a strip of foil having a width W of 10 mm and length L of 20 mm over a distance Q of 10 mm, the force F being directed in the direction opposite to the direction in which the free ends of the bristles are facing. As follows from the low force in this bending resistance, the foil will easily adapt itself to the surface of the bristle carrier to which it is attached. This facilitates not only the pad attachment step, but also adaptation of the foil to the shape of the teeth of the user.

According to another further embodiment of the exemplary first aspect of the description - in which the mouthpiece to be manufactured has two said recesses, the J-shaped or U-shaped length directions of both recesses extending parallel and the U-shaped cross-sections of both recesses opening in mutually opposite direction - the body providing step comprises providing a body with two said recesses, the J-shaped or U-shaped length directions of both recesses extending parallel and the U-shaped cross-sections of both recesses opening in mutually opposite direction, each said recess having at least one bristle carrier delimiting the respective recess; and the pad attaching step comprises attaching one or more said pads to the at least one bristle carrier of each said recess. A mouthpiece with two such recesses allows simultaneously cleaning of the dental positions (with or without teeth) of the maxillary dental arch and the mandibular dental arch.

The bristles may according to the exemplary first aspect of the description be made from materials that are frequently used for bristles of toothbrushes because of their stiffness, bend recovery, chemical resistance and abrasive resistance. These materials which according to the invention may be used for the bristles comprise the following plastics: polyamide (PA), such as all types of nylon like PA6, PA66, PA610, PA612, PA11, PA12; polyethylene terephthalate (PBT); polypropylene (PP); polyester (PE); Polystyrene (and styrene copolymers) (PS); polyurethane (PU), amongst which TPU; polyvinylidene chloride (PVC); and TPE. According to a specific embodiment of the exemplary first aspect of the description, the bristles comprise polybutylene terephthalate (PBT) or polyamide (PA) fibers, such as nylon fibers. Bristles of these materials have properties providing good cleaning action when brushing the teeth. The bristles are stiff (relatively large bending resistance) which contributes in the scrapping action of the free ends of the bristles.

According to another further embodiment wherein the bristles comprise fibers of a first material and wherein the front surface side of the foil, also called the bristled surface side of the foil, comprises a second material fusible with the first material. The second material may, according to a further embodiment of the exemplary first aspect of the description, be similar - but not necessarily identical - to the first material. The second material may according to a further embodiment be a polybutylene terephthalate (PBT) or polyamide (PA), such as nylon. As an example of the first material being similar - but not identical - to the second material, nylon may be mentioned as first material for the bristles and polyamide for the second material of at least the front surface of the foil. The foil may be made of one material or multiple materials. The foil may comprise for example two or three layers of different material.

According to another further embodiment of the first aspect of the invention the foil of the pad is fused with the bristle carrier in the pad attaching step. The bristle carrier and pad, more precisely the foil of the pad, then become so to say one integral part, which further improves the retention force against bristles from separating from the body.

According to another further embodiment of the exemplary first aspect of the description, the bristle carrier is of a third material not-fusible with the bristles and/or the front surface of the foil, wherein the foil comprises a first outer layer of a material fusible with the bristles and a second outer layer of a fourth material fusible with the third material. In case of the embodiment in which the bristles are of a first material and the front surface side of the foil, also called the bristled surface side of the foil, comprises a second material fusible with the first material, this means that the bristle carrier is of a third material not-fusible with the first material and/or second material, and that the foil comprises a first outer layer of the second material and a second outer layer of a fourth material fusible with the third material. In these further embodiments, the foil is multi-layered with the first outer layer at the front surface of the foil and the second outer layer at the back surface of the foil. The first and second outer layer may be directly joined to each other, or one or more intermediate layers may be provided between the first and second outer layer. The foil with said first outer layer configured to be fusible with the bristles and said second outer layer configured to be fusible with the bristle carrier, allows attachment of bristles to the carrier by fusing materials together from a material in cases in which the bristles and carrier are from a materials which do fuse together not or which when fused together do not provide a reliable attachment.

The fourth material may, according to a further embodiment of the exemplary first aspect of the description be similar - but not necessarily identical - to the third material. According to another further embodiment of the exemplary first aspect of the description, the fourth material is a polypropylene (PP), a polyethylene (PE), a thermoplastic elastomer (TPE), or a thermoplastic polyurethane (TPU).

The third material may be a polypropylene (PP), a polyethylene (PE), a thermoplastic elastomer (TPE), or a thermoplastic polyurethane (TPU).

As an example of the fourth material being similar - but not identical - to the third material, TPE may be mentioned as material for the carrier and PP may be mentioned as material for the second outer layer of the foil.

According to another further embodiment of the exemplary first aspect of the description, the bristle carrier comprises a polypropylene (PP), a thermoplastic elastomer (TPE), or a thermoplastic polyurethane (TPU).

According to another further embodiment of the exemplary first aspect of the description, the foil is of a non-elastic material and/or an essentially inextensible material.

According to another further embodiment of the exemplary first aspect of the description, the bristle carrier is of a flexible, elastic material.

According to another further embodiment of the exemplary first aspect of the description, the body further comprises at least part of a driving system configured for moving, such as reciprocatingly moving, the bristles provided in the recess with respect to the rest of the body. The reciprocating movement assists in cleaning the dental positions.

According to another further embodiment of the exemplary first aspect of the description, the body comprises a pressure chamber or chain of pressure chambers extending along the length of the recess - such as along the full length of the recess -, wherein the wall of the pressure chamber at the side of the recess defines the bristle carrier, wherein the pressure chamber is configured for containing a fluid under pressure; and wherein the body is configured to move the bristle carriers to and fro with respect to the recess by reciprocatingly increasing and decreasing a pressure in the pressure chamber or chain of pressure chambers between a decreased pressure condition and an increased pressure condition. A chain of pressure chambers is understood to be chain extending along the J-shaped or U-shaped length direction, the chain comprising a multiple of - viewed in said J-shaped or U-shaped length direction - aligned pressure chambers.

According to another further embodiment of the exemplary first aspect of the description, the pad manufacturing step comprises the following steps:
a) providing the bristles;
b) providing a said prefabricated foil;
c) bringing the fixed ends of the bristles in contact with the foil;
d) heating the foil and/or fixed ends of the bristles;
e) fusing of the fixed ends of the bristles with the foil resulting in the pad.

The heating of step d) may be by means of plastic welding, such as hot gas welding, heat sealing, hot plate welding, infrared welding, high frequency welding, induction welding, ultrasonic welding, friction welding, spin welding, laser welding, or a combination of one or more of these plastic welding techniques. In hot plate welding a so called heat stamp is used, which is a heated or hot body which is pressed against the bristles and/or foil to cause melting. Step d) may take place after or before step c).

According to another further embodiment of the exemplary first aspect of the description, step a) may comprise the steps of:
- providing a bristles holding tool having a foil support surface and a plurality of bores extending from the foil support surface into the tool, the bores being configured to receive bristles; and
- inserting the bristles into the bores such that their fixed ends are at the foil support surface;

wherein step c) comprises placing the foil onto the foil support surface; and
wherein after step e) the tool is separated from the pad. In the prior art it is known to attach bristles to a carrier by inserting the bristles through perforations in the carrier, and melting the projecting parts of the so called fixed ends of the bristles by means of a heat stamp so that on the carrier a melt layer is formed which is fixed to the carrier. The perforated carrier is thick and rigid and becomes part of the toothbrush construction. This perforated carrier is not a tool which is removed and further the melt layer is not a pre-fabricated foil to which the bristles are attached, but a melt layer formed from melted bristle ends.

According to an exemplary second aspect of the description, a mouthpiece obtained with the method according to the exemplary first aspect of the description is provided.

According to an exemplary third aspect of the description, one or more of the objects of the invention are achieved by providing a method of manufacturing a bristled pad consisting of a pliable foil, such as a plastic foil, and bristles, such as plastic bristles, projecting from a front surface of the foil, and the foil having a back surface opposite the front surface;
wherein the method comprises the following steps:
a) providing bristles with a fixed end and a free end;
b) providing a prefabricated foil having a thickness of at most 700 µm, such as at most 400 µm or at most 250 µm or at most 150 µm;
c) bringing the fixed ends of the bristles in contact with the foil;
d) heating the foil and/or fixed ends of the bristles;
e) fusing of the fixed ends of the bristles with the foil resulting in the bristled pad.

According to a further embodiment of the exemplary third aspect of the description, the bristled foil may have a thickness of at most 1.5 mm, such as at most 1 mm or at most 750 µm.

According to a further embodiment of the exemplary third aspect of the description, step a) may comprise the steps of:
- providing a bristles holding tool having a foil support surface and a plurality of bores extending from the foil support surface into the tool, the bores being configured to receive bristles; and
- inserting the bristles into the bores such that their fixed ends are at the foil support surface;

wherein step c) comprises placing the foil onto the foil support surface; and
wherein after step e) the tool is separated from the pad.

According to a further embodiment of the exemplary third aspect of the description, the heating of step d) may be by means of plastic welding, such as hot gas welding, heat sealing, hot plate welding, infrared welding, high frequency welding, induction welding, ultrasonic welding, friction welding, spin welding, laser welding, or a combination of one or more of these plastic welding techniques.

According to a still further embodiment of the exemplary third aspect of the description, step d) may take place after or before step c).

According to a still further embodiment of the exemplary third aspect of the description, the pliable foil of the bristled pad has a bending resistance of less than 2 Newton - such as less than 1.3 Newton or less than 0.5 Newton -, the bending resistance being defined as the force F required to bend a strip of foil having a width W of 10 mm and length L of 20 mm over a distance Q of 10 mm, the force F being directed in the direction opposite to the direction in which the free ends of the bristles are facing.

According to an exemplary fourth aspect of the description, a bristled pad obtained with the method according to the exemplary third aspect of the description is provided. According to a further embodiment of the exemplary fourth aspect of the description, the mouthpiece has two said recesses, the J-shaped or U-shaped length directions of both recesses extending parallel and the U-shaped cross-sections of both recesses opening in mutually opposite direction.

According to a still further embodiment of the exemplary fourth aspect of the description, the body comprises a pressure chamber or chain of pressure chambers extending along the length of the recess, wherein the wall of the pressure chamber at the side of the recess defines the bristle carrier, wherein the pressure chamber is configured for containing a fluid under pressure; and wherein the body is configured to move the bristle carriers to and fro with respect to the recess by reciprocatingly increasing and decreasing a pressure in the pressure chamber or chain of pressure chambers between a decreased pressure condition and an increased pressure condition.

According to an exemplary fifth aspect of the description, a dental cleaning device comprising a mouthpiece according to the exemplary fourth aspect of the description and a pressure and/or suction device which is configured to be in fluid communication with the pressure chamber or chain of pressure chambers and configured for reciprocatingly increasing and decreasing the pressure in the pressure chamber are provided.

In this application the term 'pliable' in relation to the foil is used in the meaning of supple so that it is able to bend freely and repeatedly without breaking. It may for example be a foil, like the foil of a sandwich bag, which already bends or even - when kept horizontal - tends to assume a vertical position under influence of its own weight. It may also be a foil which has a stiffness enough to allow it be kept horizontal, but bendable under influence of small forces.

In this application the term 'bristled' used as an adjective before a noun like part, pad, foil, or carrier means a part, pad, foil, or carrier, respectively, provided with bristles. In this application the term 'bristle' or 'bristles' is used to indicate a single bristle hairs or fibers as well as to indicate tufts of bristle hairs or bristle fibers.

In this application the term 'fixed end' of a bristle (or tuft or bristle fiber) is used to indicate one of the ends of the bristle, namely which is - depending on the stage in manufacturing of the bristled pad - (still) to be fixed or is (already) fixed to the pliable foil. The term 'fixed end' does not say that, in case of for example a tuft, these ends of the bristle fibers of the tuft are mutually fixed. The fixed ends of the bristle fibers of a tuft may or may not be mutually fixed. For example, after manufacturing the bristled pad, the fixed ends of the bristled fibers of a tuft may in general be mutually being fixed due to fusing together, but, in the stage before fusing the fixed ends to the foil, the fixed ends of the bristle fibers of a tuft may, although combined in a tuft, not yet be attached to each other. However, it is according to the invention conceivable that the so called fixed ends of the bristle fibers in a tuft are already attached to each other in the stage before fusing the fixed ends to the foil.

Summarizing, the present description relates thus relates to the manufacturing of a bristled pad for a mouthpiece toothbrush, a bristled pad, the manufacturing of a mouthpiece toothbrush with such a bristled pad, and a mouthpiece toothbrush. The bristled pad is manufactured from a prefabricated foil and prefabricated bristles. The prefabricated bristles are attached to the prefabricated pliable foil of at most 700 µm by fusing the fixed ends of the bristles with the foil, which results in a pliable bristled pad. In the method of manufacturing the mouthpiece, the pliable, bristled pad is attached to the body of the mouthpiece.

### BRIEF DESCRIPTION OF THE DRAWING

The invention will be explained further with reference to the drawings. In these drawings:
Figure 1 shows a lower dental arch with dental positions and a system of three orthogonal axes defining a dental arch.
Figures 2a, 2b and 2c show an example of a full U-shaped mouthpiece with a bristled pad made with the method according to the invention, wherein figure 2a shows a perspective view, figure 2b shows a cross-sectional view according to the arrows IIb in figure 2a, and figure 2c shows a cross-sectional view according to the arrows IIb in figure 2a.
Figures 3a, and 3b show an example of a half J-shaped mouthpiece with a bristled pad made with the method according to the invention, wherein figure 3a shows a perspective view, and figure 3b shows a cross-sectional view according to the arrows IIb in figure 2a.
Figures 4a, and 4b show, as a variant of figure 2, an example of a full U-shaped mouthpiece with a bristled pad made with the method according to the invention, wherein figure 4a shows a cross-sectional view according to the arrows IIb in figure 2a, and figure 4b shows a cross-sectional view according to the arrows IIb in figure 2a.
Figure 5 schematically shows an embodiment of a dental cleaning device according to the invention;
Figure 6 elucidates the definition of the term 'bending resistance' as it used in this application as well as the claims.
Figure 7 shows two bristled pads according to the invention, one in a flat condition and one in a bended condition.
Figure 8 shows two bristled pads according to the invention in the form of bristled strips, figure 8a showing the strips in flat condition and figure 8b showing the strips in a bended condition.
Figure 9 shows two sets of bristled strips according to the invention, figure 9a showing the sets in flat condition and figure 9b showing the sets in a bended condition.
Figures 10-16 show schematically examples of different manners for manufacturing a bristled pad according to the invention.

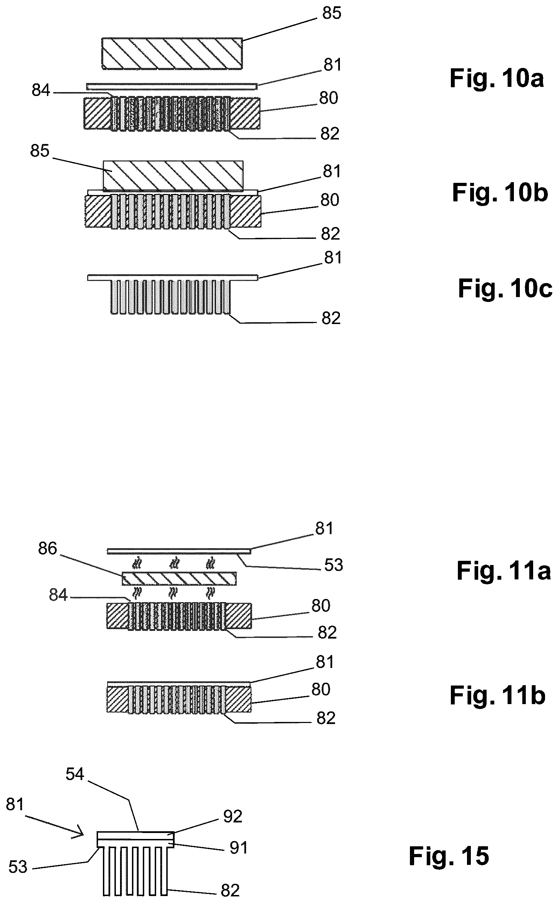

Figure 10 shows a first example of manufacturing a bristled pad, figure 10a showing a first state, figure 10b showing a second state, and figure 10c showing a third state.
Figure 11 shows a second example of manufacturing a bristled pad, figure 11a showing a first state, and figure 11b showing a second state.

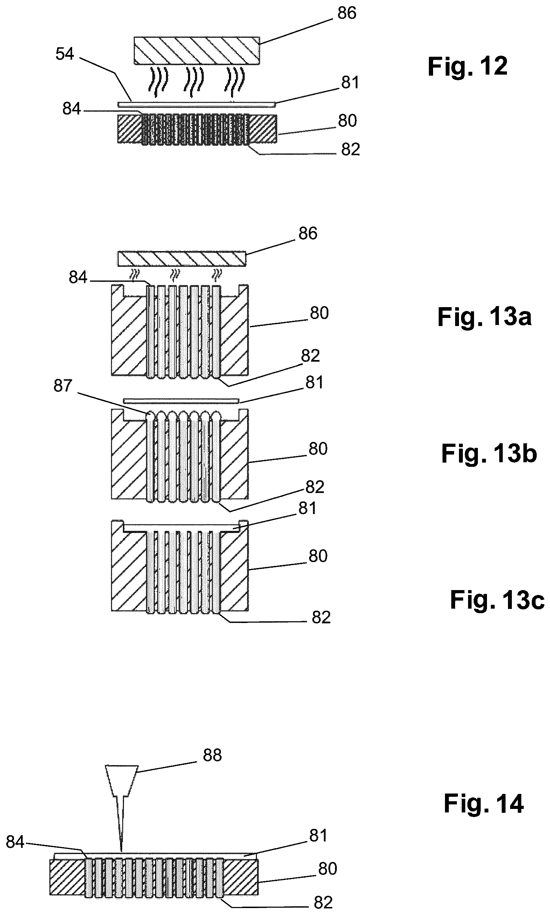

Figure 12 shows a third example of manufacturing a bristled pad.
Figure 13 shows a fourth example of manufacturing a bristled pad, figure 13a showing a first state, figure 13b showing a second state, and figure 13c showing a third state.
Figure 14 shows a fifth example of manufacturing a bristled pad.
Figure 15 shows bristled pad according to the invention, having a multi-layered foil.

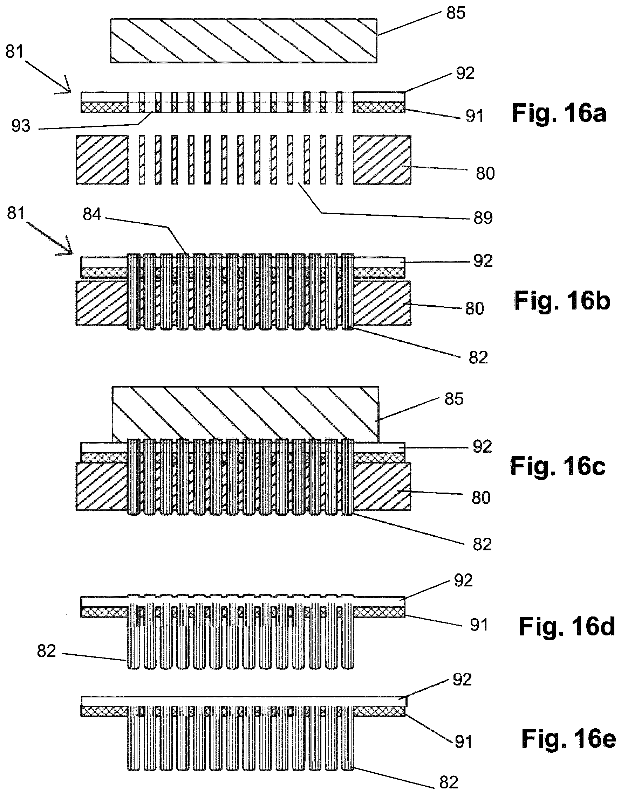

Figure 16 shows a sixt example of manufacturing a bristled pad, figure 16a showing a first state, figure 16b showing a second state, figure 16c showing a third state, and figures 16d and 16e each showing a fourth state with mutually slightly different resulting bristled pad.

### DETAILED DESCRIPTION OF THE EMBODIMENTS

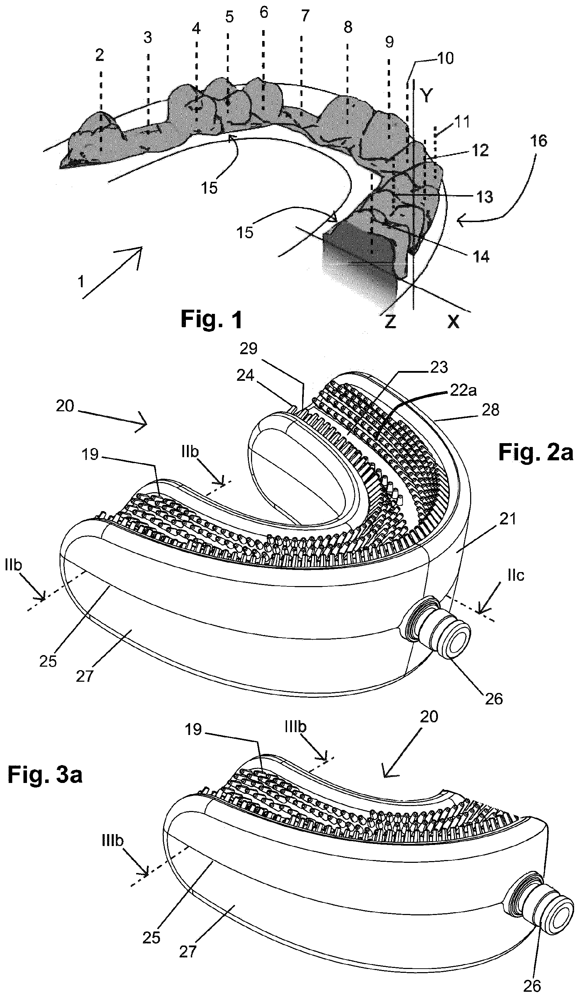

Figure 1 shows in perspective view, highly schematically a part of an upper dental arch 1 with dental positions 2-14. Each dental position is indicated with a vertical dashed line. Each dental position usually comprises a tooth which is named according to a nomenclature known to each dentist. Using this nomenclature:
- dental position 2 is the position of the left 'second molar', present in figure 1;
- dental position 3 is the position of the left 'first molar', missing in figure 1;
- dental position 4 is the position of the left 'second premolar', present in figure 1;
- dental position 5 is the position of the left 'first premolar', present in figure 1;
- dental position 6 is the position of the left 'canine', present in figure 1;
- dental position 7 is the position of the left 'lateral incisor', missing in figure 1;
- dental position 8 is the position of the left 'central incisor', present in figure 1;
- dental position 9 is the position of the right 'central incisor', present in figure 1;
- dental position 10 is the position of the right 'lateral incisor', present in figure 1;
- dental position 11 is the position of the right 'canine', present in figure 1;
- dental position 12 is the position of the right 'first premolar', present in figure 1;
- dental position 13 is the position of the right 'second premolar', present in figure 1;
- dental position 14 is the position of the right 'first molar', present in figure 1;

In figure 1 the dental position of the right 'second molar' is not shown, and also the dental positions of the right and left 'third molar', also called wisdom tooth, are not shown. Similar the lower jaw has a similar number of dental positions, which are in accordance with said nomenclature similarly named.

Reference number 15 indicates the lingual side of the arc of dental positions. The lingual side 15 is the inner side of the arc of dental positions, which inner side faces the tongue. Reference number 16 indicates the facial side of the arc of dental positions. The facial side 16 is the outer side of the arc of dental positions, which outer side faces the face, like the cheeks and lips.

Figure 1 further shows a system of three mutually orthogonal axes, comprising an x-axis X, an y-axis Y and a z-axis Z. The z-axis Z is a curved axis following the contour of the dental arch 1. The x-axis X and y-axis Y are perpendicular to each other and define an xy-plane which is essentially flat and perpendicular to the dental arch 1, i.e. each xy-plane intersecting a location on the z-axis is, at that location, perpendicular to the curved z-axis Z. The z-axis Z defines a curved length direction. The z-axis Z and y-axis Y define a curved zy-plane, with viewed along the z-axis, an arc-shape similar to shape of the dental arc. Further, the z-axis Z and x-axis X define a zx-plane and the x-axis X and y-axis Y define an xy-plane.

Referring to the terms 'J-shaped or U-shaped length direction' and 'U-shaped cross-section' as used in the claims, the 'J-shaped or U-shaped length direction' is associated to the U-shaped z-axis Z in figure1 and the 'U-shaped cross-section' is associated with the xy-plane in figure 1.

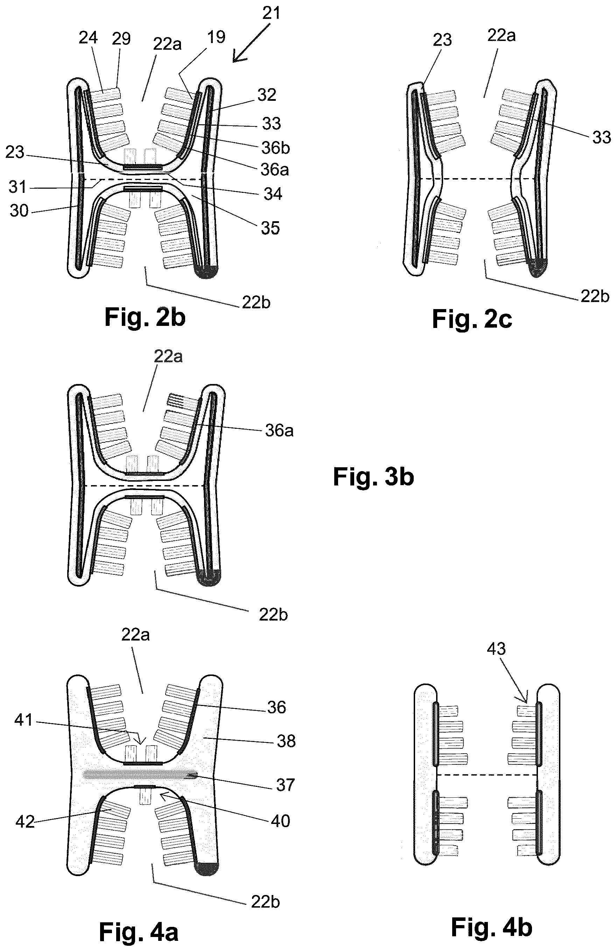

Figure 2a shows schematically a perspective view of an example of a so called full mouthpiece 20 made with the method according to the invention. Figure 2b shows schematically a cross section of the mouthpiece of figure 2a, viewed as indicated by arrows IIb in figure 2a.

The full mouthpiece 20 comprises a body 21 provided with a first recess 22a. This first recess 22a has, viewed along the z-axis of figure 1, an U-shaped length direction and, viewed in the xy-plane of figure 1, an U-shaped cross section. The first recess 22a is delimited by a recess wall 23, which is in the xy-plane U-shaped. The recess wall 23 is lined with a plurality of bristles 24. The bristles shown in figure 2 are tufts 29 of bristle fibers 24. The bristle fibers may for example be a PA fibers, such as a nylon fibers, or a PBT fibers, or a mixture of these fibers. But also fibers from other materials or mixture of fibers from other materials with or without fibers of PA, such as nylon, and/or PBT are conceivable. Each bristle, such as tuft of fibers, has one end, called the fixed end 19, attached to the recess wall 23 and extending from the recess wall 23 into the first recess 22a.

Reference 26 indicates a nipple configured for connecting the mouthpiece to a pumping and/or suctioning device. The mouthpiece 20 further has a right half 27 and a left half 28, which halves come so to say together at nipple 26.

Reference 25 indicates an imaginary curved dividing line, which defines a mirror plane parallel to the xz-plane as defined in figure 1. The mouthpiece as shown in figure 2 is so to say about mirror symmetrical with respect to this mirror plane, meaning that there is a second recess 22b (not visible in figure 2a but visible in figure 2b) opposite the first recess 22a, which second recess 22b is lined with bristles as well. It is noted that the first recess 22a may have a shape different than the shape of the second recess 22b because the (teeth of the) upper and lower arc of dental positions have different shapes. The term 'mirror symmetrically' above thus is not used in the strict mathematical sense but just in the sense that there are two recesses, each on one side of the mirror plane.

The recesses 22a, 22b are configured to encompass an entire dental arch from the dental position of the right second or first molar to the dental position of the left second respectively first molar. The recesses 22a, 22b may also be configured to encompass a larger or smaller part of an arch of dental positions.

Figure 2b shows a cross-section according to arrows IIb in figure 2a of a right part of the mouth piece 20.

As can best be seen in figure 2b, the bristles may be provided as tufts 29 of relatively thin bristle fibers 24. Further, it can be seen in figure 2b that the bristles are provided on bristled pads consisting of a foil 36a, 36b and bristles fused with the foil 36a, 36b. The foil in the example of figure 2 is a multi-layer foil with a first outer layer 36a and a second outer layer 36b.

As can be seen in figure 2b, the mouthpiece 20 has a body 21 having in its upper side a first recess 22a and in its lower side a second recess 22b. Both recesses 22a, 22b are delimitated by a flexible recess wall 23. In cross-section parallel to the xy-plane as defined in figure 1, the recess walls 23 are U-shaped and have a recess wall bottom 34 and two recess wall legs 33 extending from the recess bottom wall. The recess wall 23 is covered with tufts 29 of bristle fibers 24 on the legs 33 and/or bottom 34 of the recess wall 23.

Inside the body there is provided a pressure chamber 35, which may, via the nipple 26 (figure 2a), be filled with a fluid. The fluid may be a gas, like air, or a liquid, like water. In the embodiment as shown in figure 2, the mouthpiece has one pressure chamber. It is however noted that the mouthpiece may comprise a plurality of pressure chambers, like 5 pressure chambers, or any other number of pressure chambers. WO-2018/199760 shows examples of other numbers of pressure chambers in figures 4, 5, 7, 9 and 10. In case of multiple pressure chambers, all the pressure chambers or groups of pressure chambers may according to the invention be in fluid communication with each other, similar as is described in WO-2018/199760. Viewed in the U-shaped length direction (i.e. along the z-axis of figure 1), a chain of so to say aligned pressure chambers may be provided as well.

As can be seen in figure 2b, the mouthpiece may comprise an internal support structure of a material which is rigid relative to the material of the recess wall 23. This support structure may structure comprise a lingual plate 30 and a facial plate 32, both extending essentially parallel to the curved zy-plane defined in figure 1 and consequently, viewed along the z-axis, having a U-shape. In order to keep the lingual plate 30 and facial plate 32 at a distance from each other, the support structure may comprise one or more spacers 31. These one or more spacers 31 may for example be a multiple of bars or wires or a single plate which may extend essentially parallel to the zx-plane as defined in figure 1. In case of a single plate as spacer, this plate may divide the pressure chamber 35 in two pressure chambers, an upper one and a lower one. These two pressure chambers may be in fluid communication with each other via one or more through holes through the plate. In case of large through holes and/or a large number of through holes the two pressure chambers may effectively be one single pressure chamber.

The mouthpiece as shown in figure 2 is configured for simultaneously brushing at a plurality of dental positions. In case a tooth is present, the tooth of the respective dental position will be brushed. The remnants at a dental position, like the gum, may be brushed in case a tooth may be missing and the teeth adjacent the location of the missing tooth may be additionally brushed by bristles intended for the location of the missing tooth.

The single pressure chamber 35 comprises a first flexible recess wall 23 delimiting the first recess 22 (the upper one in figure 2b) and a second flexible recess wall 23 delimiting the second recess 22 (the lower one of figure 2b). The first and second recess walls are deformable, in particular by increasing or decreasing the pressure in the pressure chamber 23. The flexible recess walls 23 may be made from an elastic material, such as a rubberlike material. The flexible recess walls 23 may also be made from a non-elastic material. Examples of suitable materials for the recess wall are PP, a PE, a TPE, a TPU. The material of the flexible recess walls 23 may keep a predetermined shape when there is substantially no, or a low, pressure difference across an inner side and an outer side of the flexible recess walls 23.

The mouthpiece 20 is configured for the tufts 29 to engage the tooth surface of teeth of a dental arch or, in case one or more dental positions the tooth might be missing, to engage the gum at the respective dental position(s) at least when the pressure in the pressure chamber 35 is increased. In case a tooth might be missing at a dental position, especially the tufts 29 at the free ends of the recess wall legs 33 will engage the gum at the empty dental position.

Viewed in length direction Z of the dental arch - as defined in figure 1 -, the tufts 29 of bristle fibers 24 may be arranged at about the same density as viewed in the cross-sections shown in figure 2b.

Figure 2c shows that at dental location of the incisors the bottom of the U-shaped recess 22a and 22b may in fact be open (or, not showen, V-shaped). In this 'open embodiment', the first recess 22a and second recess 22b are in open connection with each other. To prevent the lingual side 30 of the body and the facial side 32 of the body from widening away from each other, some spacer 31 may still be provided at the dental position of the incisors, but this spacer 31 may also be left away.

When the pressure in the pressure chamber 35 is in increased to an increased pressure condition, for example by feeding a fluid to the pressure chamber 35, or increasing an amount of fluid in the pressure chamber 35, the recess walls 23 are so to say compacted to narrow the recess 22, whereby the bristles 24,29, in particular the free ends thereof, may engage tooth surfaces firmly and/or may be deformed against tooth surfaces. When the pressure in the pressure chamber 35 is decreased subsequently, the recess walls are so to say widened to enlarge the recess 22. This narrowing and widening of the recess walls may be small, but when alternatingly repeated with some frequency of for example 1 to 50 Hz, this alternatingly deforming of the recess wall by alternatingly narrowing and widening it, causes the bristles to move between a firmer and relatively less firm engagement with tooth surfaces and/or the bristles to alternate between a first and second deformed condition, which in turn causes a sweeping and/or rubbing of bristles along the tooth surfaces.

By a suitable cycle of increasing and decreasing pressure in the pressure chamber 35 an effective brushing action of the mouthpiece can be obtained. The bristles 24 attached to the recess wall bottom 34 generally perform an upward and downward motion during such cycling, and the bristles 24 at the recess wall legs 33 generally perform a sideways motion to and fro during such cycling in the direction of the x-axis as defined in figure 1. Due to the recess 22a, 22b alternatively narrowing and widening when alternatingly increasing and decreasing pressure, the bristles 24 at the recess wall legs may also be subjected to a back and forth pivoting around the z-axis as defined in figure 1, resulting in a sweeping and/or rubbing movement of the bristles in the direction of the y-axis as defined in figure 1.

Referring to figure 1, the width of a teeth element in the X direction varies, depending on the dental position between about 2 to 8 mm. Taking into account hat t is desired to keep the mouthpiece as small as possible, the width of the recess in the X direction is to be kept as small as possible and may be about 0 to 2 mm wider than the width of the respective tooth. The bristles may be 2 to 4 mm long, meaning that between the bristles extending from opposing recess wall legs 33 no interspace or a limited amount of interspace of about 2-4 mm is left. In figures 2, these interspaces are shown exaggerated. This limited amount of interspace makes it difficult to manufacture a mouthpiece as shown in figure 2 in economical manner. Injection moulding for example is difficult due to the bristles extending from the opposing recess wall legs extend essentially in the X direction which is transvers to the direction in which injection moulding moulds may be separated from each other after moulding. Figure 3 shows a so called half mouthpiece 20. The difference with the mouthpiece of figure 2a is basically that the right half of figure 2a has been left away, resulting in a J-shaped, half mouthpiece. With a J-shaped half mouthpiece, all dental positions of the right half of the dental positions can be cleaned in one go. After taking the mouthpiece out of the mouth, turning it around and inserting it in the mouth again, also the left half of the dental positions can be cleaned (or vice versa, first cleaning the right half and then the left half). The half mouthpiece also comprises a body 21 provided with a first recess 22a and 22b, however, the first recess 22a and second recess 22b have, viewed along the z-axis of figure 1, an J-shaped length direction and, viewed in the xy-plane of figure 1, an U-shaped cross section.

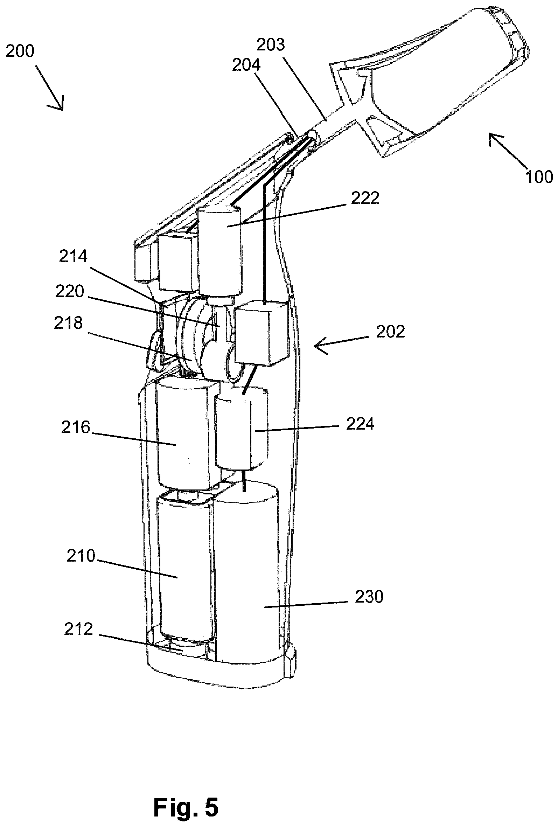

For the rest, the mouthpiece of figure 3 is basically the same as the mouthpiece of figure 2, except that in figure 3 the foil 36 of the bristled pad is a foil of one layer, whilst in the embodiment of figure 2 the foil has two (or more) layers, a first outer layer 36a and a second outer layer 36b. It is however to be noted that in the embodiment of figure 2 also bristled pads with single layer foil can be used and that in the embodiment of figure 3 also bristled pads with multi-layer foils can be used. Moving the bristles to and fro with respect to the recess(es) is realised by means of a drive system, at least part of which is arranged in the mouthpiece. The drive system may be a mechanical system causing movement of the bristles. An example of a mechanical drive system is shown in figure 4. Figure 4b can be considered as a variant of figure 2b and figure 4b can be considered as a variant of figure 2c. In this embodiment the body with mechanical drive the body may for example be a solid mass 38 in which a vibration element 37 is provided as part of the drive system. This vibration element may be set into vibration by a handle mounted at 26 with a vibrating interface, which interface in turn is set into vibration by a motor provided in the handle. Now returning to the embodiment shown in figures 2 and 3, the drive system for moving the bristles to and fro with respect to the recess(es) is realized by increasing and decreasing the pressure in the pressure chamber 35, which is effected by a pump unit. Different pump unit and valve combinations are possible. One possible embodiment is by way of example explained with reference to Figure 5.

Figure 5 schematically depicts, in a partially cut-away perspective view, a dental cleaning device 200 comprising a handle member 202 and a mouthpiece 100 coupled thereto, e.g. a mouthpiece as described in the above. The handle member 202 is provided with a handle interface 204, and the mouthpiece 100 is provided with a mouthpiece interface 203 configured to be detachably coupled to the handle interface 204. The handle member 200 comprises a battery 210 for storing electrical energy which can be fed to the battery 210 through a battery charging interface 212. The battery 210 provides energy to a printed circuit board, PCB, 214, to a pump unit comprising a motor 216, a transmission 218, a crank piston 220 and a piston pump 222, and to optionally a mouthwash pump 224. A mouthwash capsule 230 containing a mouthwash liquid may be removably accommodated in the handle member 200. The piston pump 222 may be a pneumatic pump. Instead of a piston pump also a diaphragm pump, a plunger pump, a membrane pump, or bellows pump may be used. The mouthwash pump 224 may be a hydraulic pump.

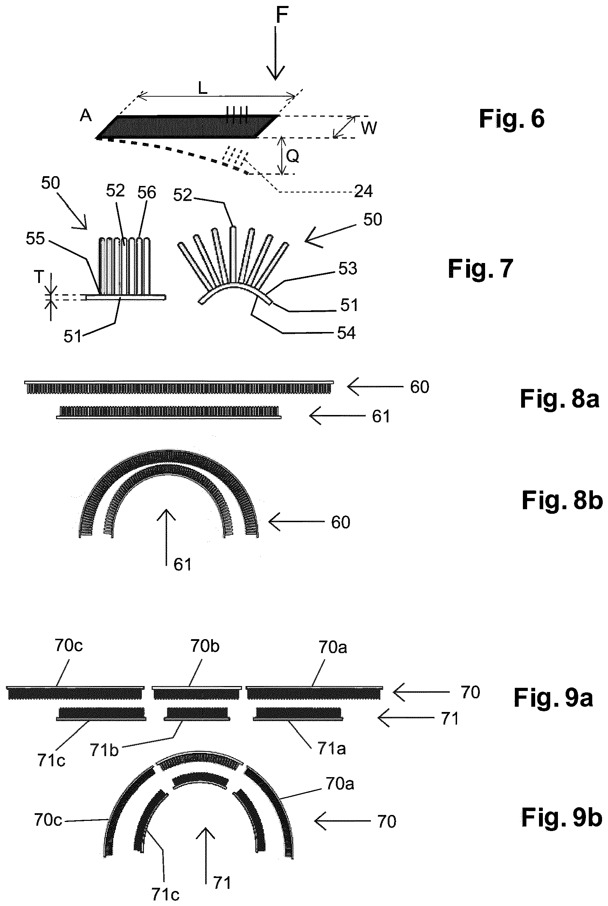

Figure 6 serves the purpose of illustrating the definition of the term 'bending resistance' as it is used in the claims as well as the description of this application. Black rimmed in gray a sample strip of foil is shown. As shown, this sample strip has a width W and a length L. The sample strip is fixed at its left end A and extends from A horizontally to the right without any support. The sample strip thus represents a so called 'cantilever beam'. When a downward force F is exerted on the right end of this sample strip/cantilever beam, the strip/beam will deflect to a deflected condition, which is shown in dashed line in figure 6. In deflected condition, the right end of the strip/beam lies a vertical distance Q below the right end of the strip/beam in unloaded condition. The bending resistance of the foil is in this application defined in terms of a distance Q which a sample strip of foil having predetermined dimensions W and L bends upon exerting a predetermined force F transverse to the foil. The force F is in this definition directed in the direction opposite to the direction in which the free ends of the bristles are facing. This direction of the force F means that the foil is bended such that the bristles are on the convex side of the bended foil, as is indicated by the in this example four bristles shown in figure 6. Doing so, the *bending resistance of the pliable foil is defined as X Newton, when a force F of X Newton is required to bend a strip of said foil having a width of 10 mm and a length of 20 mm over a distance Q of 10 mm, the force F being directed in the direction in which the free ends of the bristles are facing.* The definition illustrated in figure 6, may be used in similar manner to define the stiffness of a bristle fiber for example as follows: *'the fiber having a stiffness of X Newton, when a force F of XNewton is required to bend a bristle fiber having a length of 1 cm over a distance Q of 0.2 cm'*

Figure 7 shows two bristled pads 50 according to the invention. The pad 50 on the left is in flat condition and the pad 50 on the right is in a bended condition. Referring to the definition of 'bending resistance' as elucidated in figure 6, also the bended pad on the right of figure 7 has its bristles on the convex side. However, it is to be noted that the pad may also be bended in opposite direction, as is for example shown in figures 8b and 9b, see the bristled pads 60 respectively 70.

As shown in figure 7, the bristled pad 50 according to the invention consists of a pliable foil 51 with tufts 52 of bristle fibers. The foil 51 may have a thickness T of 40-150 µm. Further the bending resistance of the foil may for example be less than 1.3 Newton or even less than 0.5 Newton. The foil 51 has a front surface 53 from which the bristles (tufts) project. Opposite the front surface the foil 51 has a back surface 54. Each bristle has a fixed end 55 where the bristle 52 is fused to the foil 51 and a free end 56 facing away from the foil.

Figure 8 shows two bristle pads 60, 61 which, in cross section transverse to figure 8, may be in accordance with figure 7. The bristled pads 60, 61 are in this example in the form of elongate bristled strips, a first strip 60 and a second strip 61 which is - as can be seen good in figure 8a - a little shorter than the first strip 60. Figure 8a shows both bristled strips in a flat condition and figure 8b shows both strips in a bended condition as they may have when attached in the body (not shown) of the mouthpiece. The longer strip 60 is to be attached to the facial side - i.e. the outer side - of the recess and the shorter strip is to be attached to the lingual side - i.e. the inner side - of the recess. Referring to the embodiment of figure 2, the strips 60 and 61 are to be attached to the flexible recess wall 23, strip 60 on one of the wall legs 33 and strip 61 on the opposing wall leg 33. The strips 60 and 61 may be attached to the recess wall 23 by fusing the strips along their back surface 54 onto the recess wall 23. This may for example be achieved by inserting the strips 60 and 61 as a pre-fabricated part into a mould for injection moulding the recess wall 23 and possibly more parts of the body of the mouthpiece. When the material for the recess wall is injected into the mould, this material may fuse with the foil or at least the back side 54 of the foil. In similar manner a single bristled strip for the recess wall bottom 34 may be provided and attached to the recess wall bottom 34.

Figure 9 shows two sets 70, 71 of multiple bristle pads, which, in cross section transverse to figure 9, may be in accordance with figure 7. The sets 70, 71 of bristled pads 60, 61 are in this example in the form of three elongate bristled strips 70a, 70b, 7c and 71a, 71b, 71c. The first set 70 of bristled strips 70a, 70b, 70c is - as can be seen good in figure 9a - a little shorter than the second set of bristled strips 71a, 701b, 71c. Figure 9a shows both sets of bristled strips in a flat condition and figure 9b shows both sets of bristled strips in a bended condition as they may have when attached in the body (not shown) of the mouthpiece. The longer set 70 is to be attached to the facial side - i.e. the outer side - of the recess and the shorter set 71 is to be attached to the lingual side - i.e. the inner side - of the recess. Referring to the embodiment of figure 2, the bristled strips 70a, 70b, 70c and 71a, 71b, 71c are to be attached to the flexible recess wall 23, strips 70a, 70b, 70c on one of the wall legs 33 and strips 71a, 71b, 71c on the opposing wall leg 33. The strips 70a, 70b, 70c and 71a, 71b, 71c may be attached to the recess wall 23 by fusing the strips along their back surface 54 onto the recess wall 23. This may for example be achieved by inserting the strips 70a, 70b, 70c and 71a, 71b, 71c as a pre-fabricated part into a mould for injection moulding the recess wall 23 and possibly more parts of the body of the mouthpiece. When the material for the recess wall is injected into the mould, this material may fuse with the foil or at least the back side 54 of the foil. In similar manner a set of multiple bristled pads for the recess wall bottom 34 may be provided and attached to the recess wall bottom 34.

Referring to figures 8 and 9 it is noted that a single bristled strip 60 or 61according to figure 8 may be combined with a set 71 respectively 70 of bristled strips according to figure 9. The same applies for the single bristled strip at the recess bottom 34 respectively the set of bristled strips for the recess bottom.

Figures 10-14, and 16 show different examples of manufacturing a bristled pad according to the invention. These examples have in common that a bristle holding tool 80 with perforations or bores is used, that a pre-fabricated foil 81 is provided, that prefabricated bristles 82 are provided, that the pre-fabricated bristles 82 are inserted into the perforations/bores of the tool, that the prefabricated bristles 82 and prefabricated foil are attached to each other by fusing the fixed ends 84 of the pre-fabricated bristles 82 with pre-fabricated foil 81, and that after having the fixed ends of the bristles fused with the foil the tool 80 is removed. The difference between the examples is in the manner of heating the fixed ends of the bristles and or the foil for fusing them together.

Referring to figure 10 as heat stamp 85 is used. A heat stamp is a body heated electrically, heated by a fluid, or heated in any other manner for example by radiation. Figure 10a shows an example of a starting configuration, in which the pre-fabricated bristled have been inserted into the perforations/bores of the bristle holding tool, in which the pre-fabricated foil is at a distance above the tool 80 and above the fixed ends 84 of the bristles, and in which the heat stamp may already be at its operating temperature. Figure 10b shows a fusing configuration, in which the pre-fabricated foil 81 has been placed on top of the fixed ends of the bristles 82, and in which the heat stamp 85 is pressed onto the back surface of the foil. The heat of the heat stamp causes the fixed ends 84 of the bristles to fuse with the foil, such as with the front surface of the foil. Figure 10c shows the fabricated condition of the bristled pad, in which the bristle holding tool has been removed from the bristled pad.

Referring to figure 10, it is also conceivable to use a perforated pre-fabricated foil, the perforations in the foil having the same pattern as the perforations/bores of the tool. In this case the foil 81 is placed onto the tool such that the fixed ends 84 of the bristles extend into the perforations of the foil and possibly project above the foil. The heat stamp 85 will then in the condition of figure 10b press directly onto the fixed ends 84 of the bristles 82, causing these to melt and fuse with the foil.

Referring to figure 11, a heating source 86 is - see figure 11a - placed between the pre-fabricated foil 81 and the fixed bristle ends 84 to heat the foil at its front surface 53 and to heat the fixed ends 84 of the bristles 82. After having the foil and fixed ends of the bristles heated sufficiently, the heat source is removed and the heated foil is placed onto the heated ends of the bristles to allow them to fuse together, see figure 11b. This may be facilitated by a stamp, which may be heated, which exerts a pressure on the back surface of the foil. When the bristle ends are fused with the foil, the bristled pad obtained is removed from the tool (not shown in figure 11). Like with the example of figure 10, it is also conceivable to use a pre-fabricated, perforated foil in the example of figure 11. The heating source 86 of figure 11 may be any type of heating source, like a heated body, an infra-red source, an electrical heating element, hot gas etcetera.

Referring to figure 12, the pre-fabricated foil is placed between the fixed ends 84 of the bristles and a heating source 86, which may be of similar type as the heating source 86 of figure 11. In figure 12 the foil is shown at a distance above the fixed ends 84 of the bristles 82, but in practice the pre-fabricated foil will be placed on top of the fixed ends when the back surface 54 of the foil is heated by the heat source 86, which is as shown arranged at a distance from the foil 81 during the heating. The heating will cause the ends 84 of the bristles 82 to fuse with foil 81. The fusing may be further facilitated by pressing, at the end of the heating process, a stamp against the back surface 54 of the foil. Like with the example of figure 10, it is also conceivable to use a pre-fabricated, perforated foil in the example of figure 12. The heating source 86 of figure 12 may be any type of heating source, like a heated body, an infra-red source, an electrical heating element, hot gas etcetera.

Referring to figure 13, the fixed ends 84 of the bristles 82 project from the tool 80 and a heating source 86, like the heating source of figure 10 or figure 12, is used to melt the fixed ends 84, see figure 13a. This results in the fixed ends 84 forming mushroom shaped heads 87, see figure 13b. These mush room heads 87 prevent the bristles from slipping back into the bores of the tool when the foil 81 is placed on top of the ends 84/mushroom heads 87, see figure 13b. In order to establish the fusing, the foil is brought into contact with the mushroom heads and pressed downwards by means of a stamp not shown. This results in a bristled pad as shown in figure 13c, in the manufactured condition before removing the tool. The heating source 86 of figure 13 may be any type of heating source, like a heated body, an infra-red source, an electrical heating element, hot gas etcetera.

Referring to figure 14, the foil is placed on top of the fixed ends 83 of the bristles supported in the bores of the tool 80. The heating is done by means of laser, which may fuse each of the fixed ends one by one or group-wise with the foil. Like with the example of figure 10, it is also conceivable to use a pre-fabricated, perforated foil in the example of figure 14.

Figure 15 shows an example of a bristled pad having a multilayer foil 81. This multilayer foil may be a pre-fabricated multilayer foil. The foil 81 has a first outer layer 91 at the front surface side 53 of the foil and a second outer layer 92 at the back side of the foil. The first and second outer layer 91 and 92 may be of a different material. The first outer layer 91 may be of a second material identical to or similar to the first material from which the bristles are made. The second outer layer 92 may be of a fourth material identical to a third material of the bristle carrier of the body. The third material may be a material non-fusible with the first and/or second material, but may also be a material which is fusible with the first and/or second material. Similar the fourth material may be a material non-fusible with the first and/or second material, but may also be a material which is fusible with the first and/or second material. In case the first and second outer layer directly contact each other and the first and second outer layer are fusible with each other, the fusion may be much less strong than the fusion of the bristles with the first outer layer 91 but still strong enough due to the much larger contact surface between the two layers in relation to the cross-sections of the bristles. Referring to figure 13, it is noted that the foil 81 of the resulting pad of figure 13c may very well be a multi-layered foil with a first outer layer 91 formed by the melt originating from the fixed ends of the fibers and a second outer layer 92 provided by the initial foil of figure 13a.

Figure 16 shows a fourth example of manufacturing a bristled pad. This example is very similar to the example of figure 10, the main difference being that in the example of figure 16 the prefabricated foil 81 is provided with perforations 93 which mate the pattern of bores 89 in the tool. A further difference is that figure 16 shows the fabrication with a multi layered prefabricated foil having a first outer layer 91 and a second outer layer 92. However, it is to be noted that also a prefabricated, perforated single layer foil like in figures 10-14 can be used in the example of figure 16. The other way around, in the examples of figures 10-14 also a prefabricated multilayer foil like the one of figure 16 may be used.

Figure 16a shows as a first state, a tool 80 with bores 89, a foil 81 having two outer layers 91 and 92 of - in this example - mutually different material and a heat stamp 85. The heat stamp may be replaced by any other heat source 86. The lower outer layer 91 may, in an embodiment, be of a material with which the bristles do not fuse or hardly do not fuse.

In the second state of figure 16b, the foil 81 is placed on the tool 80 with the perforations 93 aligned with the bores 89 and with tufts 82 inserted through the aligned bores 89 and perforations 93 such that the fixed ends 84 of the tufts 82 are about flush with the second outer layer 92 or project above the outer layer 92.

In the third state of figure 16c, the heat stamp 85 is pressed on top of the fixed ends 84 of the tufts 82 end upper side of the second outer layer 92, and the fixed ends 87 of the tufts are fused with the second outer layer 92. Fusing the tufts with the second outer layer 92 instead of fusing them with the first outer layer 91 results in the first outer layer 91 serving as a retention layer preventing tufts from being pulled out. This because the fixed ends of the tufts will be widened a little due to the heat stamp 85 pressing on it.

Figure 16d shows an end state in which the upper surface of the bristled foil is embossed. This embossment may be due to the fixed ends 84 of the tufts 82 projecting above the foil as shown in figure 16b. As shown in figure 16e, it is however also possible to obtain a bristled pad with an essentially flat surface of the second outer layer 92.

Referring to the example of figure 16, it is to be noted that the foil 81 may also be turned around so that the second outer layer becomes the lower layer and the first outer layer - which does not fuse with the bristles - becomes the upper layer. Then the fixed ends of the bristles will fuse with the lower layer instead of the upper layer. The upper layer may than have no perforations at all.

## Claims

1. Method of manufacturing a bristled pad (50; 60; 61; 70; 71) consisting of a pliable plastic foil (51; 81) and plastic bristles (24; 29; 52; 82) projecting from a front surface (53) of the foil (51; 81), and the foil (51; 81) having a back surface (54) opposite the front surface (53);
wherein the method comprises the following steps:
a) providing bristles (24; 29; 52; 82) with a fixed end (55; 84) and a free end (56);
b) providing a prefabricated foil (51; 81) having a thickness of at most 700 µm, such as a thickness of at most 400 µm or at most 250 µm or at most 150 µm;
c) bringing the fixed ends (55; 84) of the bristles (24; 29; 52; 82) in contact with the foil (51; 81);
d) heating the foil (51; 81) and/or fixed ends (55; 84) of the bristles (24; 29; 52; 82);
e) fusing of the fixed ends (55; 84) of the bristles (24; 29; 52; 82) with the foil (51; 81) resulting in the bristled pad (50; 60; 61; 70; 71).

2. Method of manufacturing a mouthpiece (20) for simultaneously brushing at a plurality of dental positions, the mouthpiece (20) being of the type comprising a body (21) defining a recess (22) which is lined with bristles (24; 29; 52; 82) and has a J-shaped or U-shaped length direction and an at least partly U-shaped cross-section transverse to the length direction;
wherein the method comprises the pad manufacturing steps of claim 1 in which at least one pad (50; 60; 61; 70; 71) with bristles (24; 29; 52; 82) is made; the pad (50; 60; 61; 70; 71) consisting of a pliable plastic foil (51; 81) and plastic bristles (24; 29; 52; 82) projecting from a front surface (53) of the foil (51; 81); the foil (51; 81) having a back surface (54) opposite the front surface (53); and the pad manufacturing steps resulting in a bristled pad (50; 60; 61; 70; 71) with a foil (51; 81) having a thickness of at most 1.5 mm, such as at most 1 mm or at most 750 µm;
wherein the method further comprises a body providing step in which a body (21) of the mouthpiece (20) to be manufactured is provided; the body providing step comprising providing a body (21) with a recess (22) and at least one bristle carrier; the recess (22) having a J-shaped or U-shaped length direction and an at least partly U-shaped cross-section transverse to the length direction and being configured for encompassing a dental arch of multiple dental positions; the at least one bristle carrier delimiting the recess (22); and
wherein the method further comprises a pad attaching step in which during or after the body providing step one or more bristled pads (50; 60; 61; 70; 71) are attached to the at least one bristle carrier to line the bristle carrier with bristles (24; 29; 52; 82); the back surface (54) side of the foil (51; 81) facing the bristle carrier and the front surface (53) side of the foil (51; 81) facing away from the bristle carrier into the recess (22).

3. Method according to claim 1, wherein the bristled foil has a thickness of at most 1.5 mm, such as at most 1 mm or at most 750 µm.

4. Method according to claim 1 or 3, wherein step a) comprises the steps of:
- providing a bristles holding tool (80) having a foil support surface and a plurality of bores extending from the foil support surface into the tool, the bores being configured to receive bristles (24; 29; 52; 82); and
- inserting the bristles (24; 29; 52; 82) into the bores such that their fixed ends (55; 84) are at the foil support surface;
wherein step c) comprises placing the foil onto the foil support surface; and wherein after step e) the tool is separated from the pad (50; 60; 61; 70; 71).

5. Method according to one of the claims 1 and 3-4, wherein the heating of step d) is by means of plastic welding.

6. Method according to one of the claims 1 and 3-5, wherein step d) takes place after or before step c).

7. Method according to one of the claims 1 and 3-6, wherein the pliable foil (51; 81) of the bristled pad (50; 60; 61; 70; 71) has a bending resistance of less than 2 Newton - such as less than 1.3 Newton or less than 0.5 Newton -, the bending resistance being defined as the force F required to bend a strip of foil having a width W of 10 mm and length L of 20 mm over a distance Q of 10 mm, the force F being directed in the direction opposite to the direction in which the free ends (56) of the bristles (24; 29; 52; 82) are facing.

8. Bristled pad (50; 60; 61; 70; 71) obtained with the method according to one of claims 1 and 3-7.

9. Mouthpiece (20) obtained with the method according to claim 2, the mouthpiece comprising a body (21) having a recess (22) and at least one bristle carrier lined with bristles (24; 29; 52; 82), the recess (22) having a J-shaped or U-shaped length direction and an at least partly U-shaped cross-section transverse to the length direction and being configured for encompassing a dental arch of multiple dental positions, the at least one bristle carrier delimiting the recess (22);
wherein the mouthpiece (20) comprises one or more bristled pads (50; 60; 61; 70; 71) according to claim 8 when manufactured according to claim 1, the pad consisting of a pliable foil (51; 81) and bristles (24; 29; 52; 82) projecting from a front surface (53) of the foil (51; 81); the foil (51; 81) having a thickness of at most 400 µm; the bristles (24; 29; 52; 82) having a fixed end (55; 84) fused with the foil (51; 81); the foil (51; 81) having a back surface (54) opposite the front surface (53); and
wherein the one or more pads are attached to the at least one bristle carrier to line the bristle carrier with bristles (24; 29; 52; 82), the back surface (54) side of the foil (51; 81) facing the bristle carrier and the front surface (53) side of the foil (51; 81) facing away from the bristle carrier into the recess (22).

10. Mouthpiece (20) according to claim 9, wherein the mouthpiece (20) has two said recesses (22) , the J-shaped or U-shaped length directions of both recesses (22) extending parallel and the at least partly U-shaped cross-sections of both recesses (22) opening in mutually opposite direction.

11. Mouthpiece (20) according to claim 9 or 10, wherein the body (21) comprises a pressure chamber (35) or chain of pressure chambers extending along the length of the recess (22), wherein the wall of the pressure chamber at the side of the recess (22) defines the bristle carrier, wherein the pressure chamber (35) is configured for containing a fluid under pressure; and wherein the body (21) is configured to move the bristle carriers to and fro with respect to the recess (22) by reciprocatingly increasing and decreasing a pressure in the pressure chamber (35) or chain of pressure chambers between a decreased pressure condition and an increased pressure condition.

12. Dental cleaning device comprising a mouthpiece (20) according to claim 11 and a pressure and/or suction device which is configured to be in fluid communication with the pressure chamber (35) or chain of pressure chambers and configured for reciprocatingly increasing and decreasing the pressure in the pressure chamber (35).

## Patentansprüche

1. Verfahren zur Herstellung eines mit Borsten versehenen Polsters (50; 60; 61; 70; 71), das aus einer biegsamen Kunststoffolie (51; 81) und Kunststoffborsten (24; 29; 52; 82) besteht, die von einer vorderen Oberfläche (53) der Folie (51; 81) vorstehen, wobei die Folie (51; 81) eine hintere Oberfläche (54) gegenüber der vorderen Oberfläche (53) aufweist;
wobei das Verfahren die folgenden Schritte umfasst:
a) Bereitstellen von Borsten (24; 29; 52; 82) mit einem festen Ende (55; 84) und einem freien Ende (56);
b) Bereitstellen einer vorgefertigten Folie (51; 81) mit einer Dicke von höchstens 700 µm, beispielsweise einer Dicke von höchstens 400 µm oder höchstens 250 µm oder höchstens 150 µm;
c) Inkontaktbringen der festen Enden (55; 84) der Borsten (24; 29; 52; 82) mit der Folie (51; 81);
d) Erwärmen der Folie (51; 81) und/oder der festen Enden (55; 84) der Borsten (24; 29; 52; 82);
e) Verbinden der festen Enden (55; 84) der Borsten (24, 29; 52; 82) mit der Folie (51; 81), was zu dem mit Borsten versehenen Polster (50; 60, 61; 70, 71) führt.

2. Verfahren zur Herstellung eines Mundstücks (20) zum gleichzeitigen Bürsten an einer Mehrzahl von Zahnpositionen, wobei das Mundstück (20) von dem Typ ist, der einen Körper (21) umfasst, welcher eine Ausnehmung (22) definiert, die mit Borsten (24; 29; 52; 82) ausgekleidet ist und eine J-förmige oder U-förmige Längsrichtung und einen zumindest teilweise U-förmigen Querschnitt quer zu der Längsrichtung aufweist;
wobei das Verfahren die Polsterherstellungsschritte nach Anspruch 1 umfasst, bei denen mindestens ein Polster (50; 60; 61; 70; 71) mit Borsten (24; 29; 52; 82) hergestellt wird; wobei das Polster (50; 60; 61; 70; 71) aus einer biegsamen Kunststofffolie (51; 81) und Kunststoffborsten (24, 29; 52; 82) besteht, die von einer vorderen Oberfläche (53) der Folie (51; 81) vorstehen; wobei die Folie (51; 81) eine hintere Oberfläche (54) gegenüber der vorderen Oberfläche (53) aufweist; und wobei die Polsterherstellungsschritte zu einem mit Borsten versehenen Polster (50; 60, 61; 70, 71) führen, wobei die Folie (51; 81) eine Dicke von höchstens 1,5 mm, beispielsweise höchstens 1 mm oder höchstens 750 µm aufweist,
wobei das Verfahren ferner einen Körperbereitstellungsschritt umfasst, in dem ein Körper (21) des herzustellenden Mundstücks (20) bereitgestellt wird; wobei der Körperbereitstellungsschritt das Bereitstellen eines Körpers (21) mit einer Ausnehmung (22) und mindestens einem Borstenträger umfasst; wobei die Ausnehmung (22) eine J-förmige oder U-förmige Längsrichtung und einen zumindest teilweise U-förmigen Querschnitt quer zu der Längsrichtung aufweist und so konfiguriert ist, dass sie einen Zahnbogens mit mehreren Zahnpositionen umschließt; wobei der mindestens eine Borstenträger die Ausnehmung (22) begrenzt; und
wobei das Verfahren ferner einen Polsterbefestigungsschritt umfasst, in dem während oder nach dem Körperbereitstellungsschritt die Folie ein oder mehrere mit Borsten versehener Polster (50; 60, 61; 70, 71) an dem mindestens einen Borstenträger befestigt wird, um den Borstenträger mit Borsten (24, 29; 52; 82) auszukleiden, wobei die die hintere Oberfläche (54) der Folie dem Borstenträger zugewandt ist und die vordere Oberfläche (54) der Folie von dem Borstenträger weg in die Ausnehmung (22) gerichtet ist.

3. Verfahren nach Anspruch 1, wobei die mit Borsten versehene Folie eine Dicke von höchstens 1,5 mm, beispielsweise höchstens 1 mm oder höchstens 750 µm aufweist.

4. Verfahren nach Anspruch 1 oder 3, wobei Schritt a) die Schritte umfasst:
- Bereitstellen eines Borstenhaltewerkzeugs (80) mit einer Folienstützfläche und einer Mehrzahl von Bohrungen, die sich von der Folienstützfläche in das Werkzeug (80) hinein erstrecken, wobei die Bohrungen zur Aufnahme von Borsten (24, 29; 52; 82) konfiguriert sind; und
- Einführen der Borsten (24, 29; 52; 82) in die Bohrungen, so dass sich ihre festen Enden (55; 84) an der Folienstützfläche befinden;
wobei Schritt c) das Platzieren der Folie (51; 81) auf der Folienstützfläche umfasst; und
wobei nach Schritt e) das Werkzeug (80) von dem Polster (50; 60, 61; 70, 71) gelöst wird.

5. Verfahren nach einem der Ansprüche 1 und 3-4, wobei das Erwärmen in Schritt d) durch Kunststoffschweißen erfolgt.

6. Verfahren nach einem der Ansprüche 1 und 3-5, wobei Schritt d) nach oder vor Schritt c) erfolgt.

7. Verfahren nach einem der Ansprüche 1 und 3-6, wobei die biegsame Folie (51; 81) des mit Borsten versehenen Polsters (50; 60, 61; 70, 71) einen Biegewiderstand von weniger als 2 Newton - wie z.B. weniger als 1,3 Newton oder weniger als 0,5 Newton - aufweist, wobei der Biegewiderstand als die Kraft F definiert ist, die erforderlich ist, um einen Folienstreifen mit einer Breite W von 10 mm und einer Länge L von 20 mm über eine Strecke Q von 10 mm zu biegen, wobei die Kraft F in die Richtung gerichtet ist, die der Richtung entgegengesetzt ist, in die die freien Enden (56) der Borsten (24, 29; 52; 82) weisen.

8. Mit Borsten versehenes Polster (50; 60; 61; 70; 71), das nach dem Verfahren nach einem der Ansprüche 1 und 3-7 hergestellt ist.

9. Mundstück (20) nach Verfahren nach Anspruch 2, wobei das Mundstück einen Körper (21) mit einer Ausnehmung (22) und mindestens einen mit Borsten (24; 29; 52; 82) ausgekleideten Borstenträger umfasst, wobei die Ausnehmung (22) eine J-förmige oder U-förmige Längsrichtung und einen zumindest teilweise U-förmigen Querschnitt quer zu der Längsrichtung aufweist und so konfiguriert ist, dass sie einen Zahnbogen mit mehreren Zahnpositionen umschließt, wobei der mindestens eine Borstenträger die Ausnehmung (22) begrenzt;
wobei das Mundstück (20) ein oder mehrere mit Borsten versehene Polster (50; 60; 61; 70; 71) nach Anspruch 8 umfasst, wenn es/sie nach Anspruch 1 hergestellt ist/sind, wobei das Polster aus einer biegsamen Folie (51; 81) und Borsten (24; 29; 52; 82) besteht, die von einer vorderen Oberfläche (53) der Folie (51; 81) vorstehen; wobei die Folie (51; 81) eine Dicke von höchstens 400 µm aufweist; wobei die Borsten (24; 29; 52; 82) ein festes Ende (55; 84) aufweisen, das mit der Folie (51; 81) verbunden ist; wobei die Folie (51; 81) eine hintere Oberfläche (54) gegenüber der vorderen Oberfläche (53) aufweist; und
wobei das eine oder die mehreren Polster an dem mindestens einen Borstenträger befestigt sind, um den Borstenträger mit Borsten (24; 29; 52; 82) auszukleiden, wobei die die hintere Oberfläche (54) der Folie dem Borstenträger zugewandt ist und die vordere Oberfläche (54) der Folie von dem Borstenträger weg in die Ausnehmung (22) gerichtet ist.

10. Mundstück (20) nach Anspruch 9, wobei das Mundstück (20) zwei der Ausnehmungen (22) aufweist, wobei die J-förmigen oder U-förmigen Längsrichtungen beider Ausnehmungen (22a, 22b) parallel verlaufen und sich die zumindest teilweise U-förmigen Querschnitte beider Ausnehmungen (22a, 22b) in zueinander entgegengesetzter Richtung öffnen.

11. Mundstück (20) nach Anspruch 9 oder 10, wobei der Körper (21) eine Drucckammer (35) oder eine Kette von Druckkammern (35) umfasst, die sich entlang der Länge der Ausnehmung (22) erstrecken, wobei die Wand der Druckkammer (35) an der Seite der Ausnehmung (22) den Borstenträger definiert, wobei die Druckkammer (35) zur Aufnahme eines Fluids unter Druck konfiguriert ist; und wobei der Körper (21) so konfiguriert ist, dass er die Borstenträger in Bezug auf die Ausnehmung (22) hin- und herbewegt, indem er einen Druck in der Druckkammer (35) oder der Kette von Druckkammern (35) zwischen einem Zustand mit vermindertem Druck und einem Zustand mit erhöhtem Druck hin- und hergehend erhöht und vermindert.

12. Zahnreinigungsvorrichtung, die ein Mundstück (20) nach Anspruch 11 und eine Druck- und/oder Saugvorrichtung umfasst, die so konfiguriert ist, dass sie in Fluidverbindung mit der Druckkammer (35) oder der Kette von Druckkammern steht, und so konfiguriert ist, dass sie den Druck in der Druckkammer (35) abwechselnd erhöht und verringert.

## Revendications

1. Procédé de fabrication de touffe de soies (50; 60; 61; 70; 71) constituée d'une feuille plastique pliable (51 ; 81) et des soies plastiques (24; 29; 52; 82) faisant saillie d'une surface avant (53) de la feuille (51; 81), et la feuille (51; 81) ayant une surface arrière (54) en regard de la surface avant (53) ;
le procédé comprenant les étapes suivantes:
a) munir les soies (24, 29; 52; 82) d'une extrémité fixe (55 ; 84) et d'une extrémité libre (56) ;
b) fournir une feuille préfabriquée (51; 81) ayant une épaisseur d'au plus 700 µm telle qu'une épaisseur de 400 µm au plus ou 250 µm au plus ou 150 µm au plus ;
c) amener les extrémités fixes (55; 84) des soies (24, 29; 52; 82) en contact avec la feuille (51; 81);
d) chauffer la feuille (51; 81) et/ou les extrémités fixes (55; 84) des soies (24, 29; 52; 82);
e) fusionner les extrémités fixes (55; 84) des soies (24, 29; 52; 82) avec la feuille (51; 81) formant ainsi la touffe de soies (50; 60, 61; 70, 71).

2. Procédé de fabrication d'un embout buccal (20) pour le brossage simultané dans une pluralité de positions dentaires, l'embout buccal (20) étant du type comprenant un corps (21) définissant un évidement (22) qui est bordé de soies (24, 29; 52; 82) et a un sens de la longueur sous la forme de J ou sous la forme de U et une section transversale au moins en partie en forme de U transversalement au sens de la longueur;
le procédé comprenant les étapes de fabrication selon la revendication 1, dans laquelle est fabriquée au moins une touffe (50; 60, 61; 70, 71) constituée de soies (24; 29; 52; 82); la touffe (50; 60, 61; 70, 71) étant constituée d'une feuille en plastique pliable (51; 81) et de soies en plastique (24, 29; 52; 82) faisant saillie d'une surface avant (53) de la feuille (51; 81); la feuille (51; 81) ayant une surface arrière (54) en regard de la surface avant (53); et les étapes de fabrication permettant d'obtenir une touffe de soies (50; 60; 61; 70; 71) munie d'une feuille (51 ; 81) ayant une épaisseur de 1,5 mm au plus, telle que 1 mm au plus ou 750 µm au plus ;
le procédé comprenant en outre une étape consistant à fournir un corps pendant laquelle un corps (21) d'un embout buccal (20) devant être fabriqué est fourni; l'étape de fourniture de corps consiste à fournir un corps (21) doté d'un évidement (22) et d'au moins un support de soies; l'évidement (22) ayant un sens de la longueur en forme de J ou en forme de U et une section transversale au moins en partie en forme de U transversalement au sens de la longueur et étant conçue pour entourer une arche dentaire de plusieurs positions dentaires; l'au moins un support de soies délimitant l'évidement (22); et
dans lequel le procédé comprend en outre une étape consistant à fixer la touffe pendant laquelle, pendant ou après l'étape de fourniture de corps, une ou plusieurs touffes de soies (50; 60, 61; 70, 71) sont fixées à l'au moins un support de soies pour border de soies (24; 29; 52; 82) le support de soies ; la surface arrière (54) de la feuille (51; 81) faisant face au support de soies et la surface avant (53) de la feuille (51; 81) étant orientée à l'opposé du support de soies dans l'évidement (22).

3. Procédé selon la revendication 1, dans lequel la feuille de soies a une épaisseur de 1,5 mm au plus, telle que 1 mm au plus ou 750 µm au plus.

4. Procédé selon la revendication 1 ou 3, dans lequel l'étape a) comprend les étapes consistant à:
- fournir un outil de maintien de soies (80) ayant une surface de support de feuille et une pluralité de trous s'étendant depuis la surface de support de feuille dans l'outil, les trous étant conçus pour recevoir les soies (24, 29; 52; 82); et
- insérer les soies (24, 29; 52; 82) dans les trous de sorte que leurs extrémités fixes (55; 84) se trouve au niveau de la surface de support de feuille;
dans lequel l'étape c) consiste à placer la feuille sur la surface du support de feuille; et dans lequel après l'étape e) l'outil est séparé de la touffe (50; 60, 61; 70, 71).

5. Procédé selon l'une quelconque des revendications 1 et 3 à 4, dans lequel la chaleur à l'étape d) est produite au moyen de soudage des plastiques.

6. Procédé selon l'une quelconque des revendications 1 et 3 à 5, dans lequel l'étape d) a lieu après ou avant c).

7. Procédé selon les revendications 1 et 3 à 6, dans lequel la feuille pliable (51; 81) de la touffe de soies (50; 60, 61; 70, 71) présente une résistance au pliage inférieure à 2 newtons - telle que inférieure à 1,3 newton ou inférieure à 0,5 newton -, la résistance de pliage étant définie comme la force F nécessaire pour plier une bande de feuille ayant une largeur W de 10 mm et une longueur L de 20 mm sur une distance Q de 10 mm, la force F étant dirigée dans le sens opposé au sens auquel font face les extrémités libres (56) des soies (24, 29; 52; 82).

8. Touffe de soies (50; 60; 61; 70; 71) obtenue selon le procédé selon l'une quelconque des revendications 1 et 3 à 7.

9. Embout buccal (20) obtenu selon le procédé selon la revendication 2, l'embout buccal comprenant un corps (21) ayant un évidement (22) et au moins un support de soies bordé de soies (24;29; 52; 82), l'évidement (22) ayant un sens de la longueur en forme de J ou en forme de U et une section transversale au moins en partie en forme de U transversalement au sens de la longueur et étant conçue pour entourer une arche dentaire de plusieurs positions dentaires, l'au moins un support de soies délimitant l'évidement (22) ;
l'embout (20) comprenant une ou plusieurs touffes de soies (50; 60, 61; 70, 71) selon la revendication 8 lorsqu'elle(s) est/sont fabriquée(s) selon la revendication 1, la touffe étant constituée d'une feuille pliable (51; 81) et de soies (24, 29; 52; 82) faisant saillie d'une surface avant (53) de la feuille (51; 81); la feuille (51; 81) ayant une épaisseur de 400 µm au plus ; les soies (24, 29; 52; 82 ayant une extrémité fixe (55 ; 84) fusionnées avec la feuille (51; 81) ayant une surface arrière (54) en regard de la surface avant (53) ; et
dans lequel la ou les touffes de soies sont fixées à l'au moins un support de soies pour border le support de soies (24; 29; 52; 82), la surface arrière (54) de la feuille (51; 81) faisant face au support de soies et la surface avant (53) de la feuille (51; 81) étant orientée à l'opposé du support de soies dans l'évidement (22)

10. Embout buccal (20) selon la revendication 9, l'embout buccal (20) ayant lesdits deux évidements (22), les sens de la longueur en forme de J ou en forme de U des deux évidements (22) s'étendant parallèlement et les au moins sections transversales en forme de U des deux évidements (22) s'ouvrant dans le sens opposé entre elles.

11. Embout buccal (20) selon la revendication 9 ou 10, dans lequel le corps (21) comprend une chambre de pression (35) ou une série de chambres de pression s'étendant le long de la longueur de l'évidement (22), dans lequel la paroi de la chambre de pression sur le côté de l'évidement (22) définit le support de soies, dans lequel la chambre de pression (35) est conçue pour contenir un fluide sous pression; et dans lequel le corps (21) est conçu pour déplacer les supports de soies vers l'évidement (22) et à partir de ce dernier par augmentation et réduction réciproques d'une pression dans la chambre de pression (35) ou dans la série de chambres de pression entre un état de pression réduite et dans un état de pression augmentée.

12. Dispositif de nettoyage dentaire comprenant un embout buccal (20) selon la revendication 11 et un dispositif de pression et/ou d'aspiration qui est conçu pour être en communication fluidique avec la chambre de pression (35) et une série de chambres de pression et conçu pour augmenter et réduire alternativement la pression dans la chambre de pression (35).
